# EUROPÄISCHE PATENTANMELDUNG

(11) **EP 1 790 874 A1**
(43) Veröffentlichungstag der Anmeldung: **30.05.2007**
(21) Anmeldenummer: 06123563.6
(22) Anmeldetag: 07.11.2006
(51) Int. Cl.: F16H 7/12

(54) **Spannvorrichtung zum Spannen eines Antriebsriemens beziehungsweise einer Antriebskette**

(30) Priorität: 26.11.2005 DE 102005056417
(71) Anmelder: Schaeffler KG, 91074 Herzogenaurach (DE)
(72) Erfinder: Bogner, Michael, 90542, Eckental (DE); Hartmann, Bernd, 91085, Weisendorf (DE)

(57) **Zusammenfassung**

Die Erfindung betrifft eine Spannvorrichtung zum Spannen beispielsweise eines Antriebsriemens (8), welcher über die Riemenscheibe (10) eines anzutreibenden, in Spannrichtung verstellbaren Aggregates (6) geführt ist, umfassend eine in der Spannrichtung wirkende Spannfeder (12) und einen entgegen der Spannrichtung wirkenden Dämpfungsmechanismus (14). Der Dämpfungsmechanismus (14) ist als ein von der Spannfeder (12) baulich getrenntes, linear wirkendes Bauelement ausgebildet, welches mit dem Aggregat (6) über eine nur bei einer Bewegung entgegen der Spannrichtung wirksame Mitnehmerverbindung (Mitnehmerplatte 30; Endfläche 32) gekoppelt ist.

## Beschreibung

### Gebiet der Erfindung

Die Erfindung betrifft eine Spannvorrichtung zum Spannen eines Antriebsriemens beziehungsweise einer Antriebskette, welche über die Riemenscheibe oder das Kettenrad eines anzutreibenden, in Spannrichtung verstellbaren Aggregates oder einer beweglichen Spannrollenanordnung geführt ist, umfassend eine in Spannrichtung wirkende Spannfeder und einen vorzugsweise entgegen der Spannrichtung wirkenden Dämpfungsmechanismus.

### Hintergrund der Erfindung

Spannvorrichtungen der eingangs genannten Art werden in weitem Umfang im Verbrennungsmotorenbau eingesetzt, wobei durch einen Antriebsmotor über einen Riemenantrieb beziehungsweise Kettenantrieb Nebenaggregate, wie beispielsweise Lichtmaschinen, Wasserpumpen, Klimaanlagen oder dergleichen, angetrieben werden. Die Spannvorrichtungen dienen dazu, die Spannung des Antriebsriemens beziehungsweise der Antriebskette einzustellen und auch über eine längere Betriebsdauer aufrechtzuerhalten. Die Spannvorrichtungen wirken dabei in an sich bekannter Weise entweder direkt auf ein in Spannrichtung verstellbares Aggregat oder auf eine an einem Antriebsriemen oder einer Antriebskette anliegende bewegliche Spannrolle, letzteres vorzugsweise dann, wenn mit einem einzigen Antriebsriemen beziehungsweise einer einzigen Antriebskette mehrere Nebenaggregate angetrieben werden.

Die Spannung des Antriebsriemens oder der Antriebskette wird dabei durch die Federkraft der genannten Spannfeder bestimmt. Der Dämpfungsmechanismus hat die Aufgabe, ein beispielsweise durch eine plötzliche Änderung des Antriebsmomentes angefachtes Schwingen des durch die Spannfeder gespannten Antriebssystems zu verhindern. Der Dämpfungsmechanismus soll vorzugsweise so ausgelegt sein, dass dieser eine Bewegung entgegen der Spannrichtung dämpft, während er eine Bewegung in Spannrichtung nicht behindert.

Die DE 10 2005 002 253 A1 zeigt einen Riemenspanner, welcher als an einem Schwenkarm angeordnete, an einen Antriebsriemen anlegbare Spannrolle ausgebildet ist. Die als Torsionsfeder ausgebildete Spannfeder und der Dämpfungsmechanismus sind jeweils zur Schwenkachse des Schwenkarmes und zueinander koaxial angeordnet. Abgesehen davon, dass eine derartige Spannvorrichtung nur in Verbindung mit einem schwenkbar gelagerten Aggregat beziehungsweise einer schwenkbar angeordneten Spannrolle, nicht jedoch mit einem linear verstellbaren Aggregat beziehungsweise einer linear verstellbaren Spannrolle verwendbar ist, wird ein Nachteil darin gesehen, dass die als Schraubenfeder ausgebildete Spannfeder nicht nur in Spannrichtung, also in Umfangsrichtung wirkt, sondern auch eine axiale, den Hebelarm an die Scheibe drückende und damit eine Bewegung in beziehungsweise entgegen der Spannrichtung hemmende Kraft aufbringt, so dass eigens ein reibungsmindernder Belag 7 vorgesehen werden muss.

Ein weiterer Nachteil ist, dass der die Dämpfung bewirkende Reibbelag eine Bremskraft auch in Spannrichtung aufbringt, so dass die Spannfeder entsprechend stärker ausgelegt werden muss. Außerdem kann eine Spannvorrichtung gemäß der oben genannten Druckschrift immer dann nicht verwendet werden, wenn im Bereich der Schwenklagerung des Aggregates oder der Spannrolle der dafür erforderliche Einbauraum nicht zur Verfügung steht.

### Aufgabe der Erfindung

Der Erfindung liegt die Aufgabe zugrunde, eine Spannvorrichtung der im Oberbegriff des Anspruchs 1 genannten Art zu schaffen, die einbautechnisch günstiger als die bekannte Lösung ist, die auch in Verbindung mit einem linear verstellbaren Aggregat oder einer linear verstellbaren Spannrolle verwendbar ist, und bei der keinerlei Brems- beziehungsweise Dämpfungskräfte in Spannrichtung auftreten.

### Zusammenfassung der Erfindung

Der Erfindung liegt zunächst die Erkenntnis zugrunde, dass eine räumliche Trennung des Dämpfungsmechanismus von der Spannfeder die Konstruktion der Spannvorrichtung vereinfacht und die Möglichkeit ihres Einbaus erheblich erweitert. Die Erfindung geht dabei aus von einer Spannvorrichtung zum Spannen eines Antriebsriemens oder einer Antriebskette, welche über die Riemenscheibe beziehungsweise das Kettenrad eines anzutreibenden, in Spannrichtung verstellbaren Aggregates oder einer beweglichen Spannrollenanordnung geführt sind, umfassend eine in Spannrichtung wirkende Spannfeder und einen entgegen der Spannrichtung wirkenden Dämpfungsmechanismus. Dabei ist erfindungsgemäß vorgesehen, dass der Dämpfungsmechanismus als ein von der Spannfeder baulich getrenntes, linear wirkendes Bauelement ausgebildet ist, welches mit dem Aggregat beziehungsweise der Spannrolle über eine nur bei einer Bewegung entgegen der Spannrichtung wirksame Mitnehmerverbindung gekoppelt ist.

Die bauliche Trennung des Dämpfungsmechanismus von der Spannfeder vereinfacht die Konstruktion der Spannvorrichtung, da beide Bauelemente sich nicht räumlich beeinflussen, so dass der Konstrukteur in ihrer Gestaltung frei ist. Dadurch, dass der Dämpfungsmechanismus als linear wirkendes Bauelement ausgebildet ist, ist dieses ohne weiteres auch in Verbindung mit einem linear verstellbaren Aggregat beziehungsweise einer linear beweglichen Spannrolle einsetzbar. Die Kopplung über die erfindungsgemäß vorgesehene, nur in einer Richtung wirkende Mitnehmerverbindung stellt darüber hinaus sicher, dass diese in der anderen Richtung, also im vorliegenden Fall in Spannrichtung wirkungslos bleibt, so dass die Bewegung in Spannrichtung nicht behindert wird.

Eine vorteilhafte Ausgestaltung der Erfindung sieht vor, dass der Dämpfungsmechanismus einen in einem Dämpfungszylinder verschiebbar angeordneten ringförmigen Bremskörper umfasst, in welchen von einer Stirnseite ein zum Bremskörper hin konisch zulaufender Dämpfungskolben eingreift, und der von der anderen Stirnseite durch ein sich am Zylinderboden abstützendes vorgespanntes Federelement belastet ist. Durch das Federelement wird der Bremskörper bei allen Betriebsstellungen in Anlage am Dämpfungskolben gehalten. Die konische Form des Dämpfungskolbens und die dazu komplementäre Innenwand des Bremskörpers bewirken in erwünschter Weise eine progressive Dämpfungscharakteristik des Dämpfungsmechanismus.

Eine Bauform sieht vor, dass der Dämpfungszylinder an einer das Aggregat beziehungsweise die Spannrolle tragenden Tragstruktur fest angeordnet ist, und dass der Dämpfungskolben über die Mitnehmerverbindung mit dem Aggregat gekoppelt ist. Auf diese Weise muss das Aggregat oder die Spannrollenanordnung lediglich über eine geeignete Mitnehmerfläche verfügen, die sich an den Dämpfungskolben anlegt und so die Mitnehmerverbindung bildet.

Um in der Auswahl des Montageortes des Dämpfungszylinders frei zu sein, kann gemäß einer weiteren Ausgestaltung der Erfindung vorgesehen sein, dass die Mitnehmerverbindung einen am Aggregat oder der Spannrollenanordnung angeordneten, den jeweiligen konstruktiven Gegebenheiten angepassten Mitnehmerarm mit einer daran angeordneten Mitnehmerplatte umfasst, die sich an das dieser zugewandte Ende des Dämpfungskolbens anlegt.

Um das Auflegen eines Antriebsriemens beziehungsweise einer Antriebskette zu erleichtern, ist gemäß einer weiteren Ausgestaltung der Erfindung dafür gesorgt, dass eine Verriegelungsvorrichtung zum Verriegeln des Aggregates oder der Spannrollenanordnung in einer ein Auflegen des Antriebsriemens beziehungsweise der Antriebskette ermöglichenden Verriegelungsstellung vorhanden ist. Auf diese Weise kann das Aggregat oder die Spannrollenanordnung gegen die Kraft der Spannfeder in die Verriegelungsstellung verstellt und in dieser festgehalten werden, um den Antriebsriemen beziehungsweise die Antriebskette aufzulegen. Anschließend wird die Verriegelungsvorrichtung wieder gelöst, so dass das Aggregat beziehungsweise die Spannrollenanordnung unter der Wirkung der Spannfeder in die Betriebsstellung verstellt wird, bei der der Antriebsriemen oder die Antriebskette gespannt ist.

Die Verriegelungsvorrichtung umfasst beispielsweise ein an der Tragstruktur oder an dem daran angeordneten Dämpfungszylinder angeordnetes Riegelelement, welches mit einem an dem Aggregat beziehungsweise der Spannrollenanordnung angeordneten Gegen-Riegelelement in beziehungsweise außer Eingriff bringbar ist.

Dazu ist gemäß einer bevorzugten konstruktiven Ausgestaltung der Erfindung an dem Dämpfungszylinder ein Verriegelungsarm ausgebildet, welcher zumindest in der Verriegelungsstellung den Mitnehmerarm überlappt, wobei an einem der beiden Bauteile, nämlich dem Verriegelungsarm oder dem Mitnehmerarm, ein Riegel angeordnet ist, welcher zwischen einer in eine am jeweils anderen Bauteil ausgebildete Riegelöffnung eingreifenden Eingriffsstellung und einer Außereingriffsstellung verstellbar ist.

Die Spannfeder ist gemäß einer bevorzugten Ausgestaltung der Erfindung als zwischen dem Aggregat beziehungsweise der Spannrollenanordnung einerseits und der Tragstruktur andererseits angeordnete Schrauben-Druckfeder ausgebildet. Schraubendruckfedern stellen einfache, preiswerte und zuverlässige Bauelemente dar, die für jeden Auslegungsfall am Markt erhältlich sind.

Da im montierten Zustand die Schrauben-Druckfeder nur auf Druck belastet wird, lässt sich eine sehr einfache Montage der Schrauben-Druckfeder verwirklichen, indem diese mittels sich gegenüberliegender, an dem Aggregat oder der Spannrollenanordnung einerseits und an der Tragstruktur andererseits ausgebildeter, in die jeweils zugeordneten Enden der Druckfeder formschlüssig eingreifender Aufnahmestücke gehalten wird.

In weiterer Ausgestaltung der Erfindung ist vorgesehen, dass die Schrauben-Druckfeder als progressiv gewickelte Feder ausgebildet ist derart, dass die Federkraft mit dem Federweg progressiv ansteigt, so dass die Rückstellkraft, die für die Spannung des Antriebsriemens oder der Antriebskette verantwortlich ist, mit zunehmender Federsauslenkung zunimmt.

### Kurze Beschreibung der Zeichnungen

Die Erfindung wird im Folgenden anhand der beiliegenden Zeichnung an einigen Ausführungsformen näher erläutert. Darin zeigt
- Fig. 1: schematisch in einer Seitenansicht ein schwenkbar an einer Tragstruktur angeordnetes Aggregat mit einem zugeordneten Dämpfungsmechanismus,
- Fig. 2: eine Darstellung etwa gemäß der Fig. 1, mit einer Verriegelungsvorrichtung,
- Fig. 3: ein Aggregat gemäß den Figuren 1 und 2, mit einer zugeordneten Spannfeder, und
- Fig. 4a bis 4c: unterschiedliche Aufnahmestücke zum Fixieren der Spannfeder gemäß Fig. 3.

### Detaillierte Beschreibung der Zeichnungen

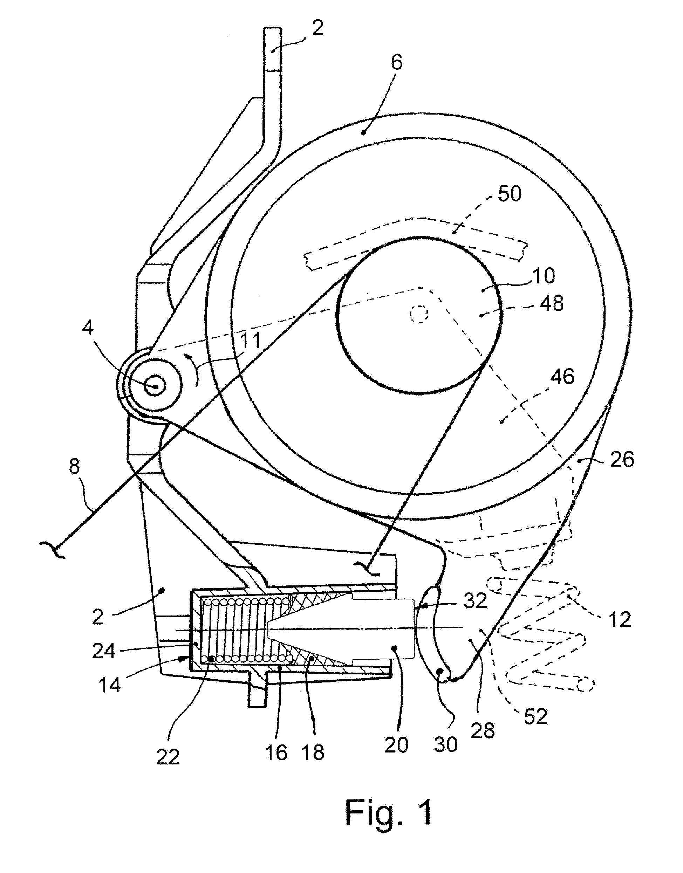

Fig. 1 zeigt - mit durchgehenden Linien dargestellt - demnach ein an einer Tragstruktur 2 um einen Schwenkachse 4 schwenkbar angeordnetes Aggregat 6, beispielsweise einen Startergenerator für einen nicht dargestellten Verbrennungsmotor. Die Tragstruktur 2 ist an diesem Verbrennungsmotor fest angeordnet beziehungsweise ausgebildet. Mit gestrichelten Linien ist in dieser Figur 1 eine Spannrollenanordnung angedeutet, die weiter hinten genauer erläutert wird.

Das Aggregat 6 wird im dargestellten Ausführungsbeispiel von einem Antriebsriemen 8 angetrieben oder treibt diesen an, welcher einerseits um eine nicht dargestellte, mit der Kurbelwelle des Verbrennungsmotors verbundene Antriebsriemenscheibe und andererseits um eine mit einer Welle des Aggregates 6 verbundene Riemenscheibe 10 herum geschlungen ist.

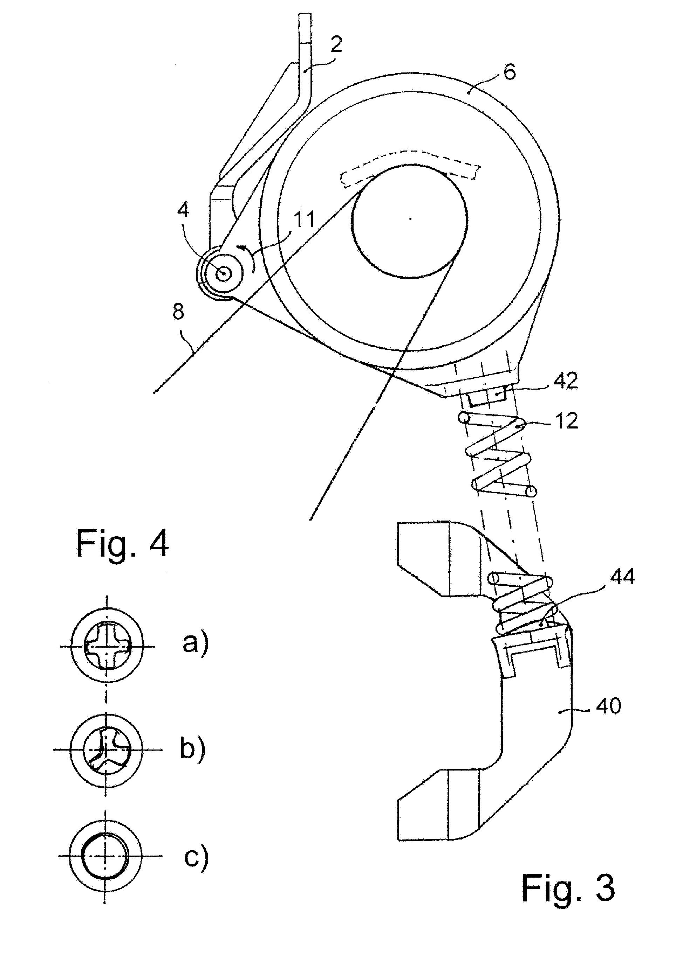

Das Aggregat 6 wird durch eine insbesondere in Fig. 3 genauer dargestellte Spannfeder 12 in Fig. 1 im Gegenuhrzeigersinn, also in Richtung der Pfeils 11 belastet, wie anhand der Fig. 3 noch näher erläutert wird. Dadurch wird der Antriebsriemen 8 gespannt gehalten.

In dem in Fig. 1 unteren Bereich der Tragstruktur 2 ist ein als Ganzes mit 14 bezeichneter Dämpfungsmechanismus vorgesehen, welcher eine Bewegung des Aggregates entgegen der Spannrichtung, also in Fig. 1 im Uhrzeigersinn dämpfen soll. Der Dämpfungsmechanismus 14 umfasst einen Dämpfungszylinder 16, einen darin verschiebbar angeordneten Bremskörper 18, einen in den Bremskörper 18 eingreifenden, einen zum Bremskörper 18 hin konisch zulaufenden Dämpfungskolben 20 und ein Federelement 22, welches sich am Zylinderboden 24 abstützt und den Bremskörper 18 entgegen der Wirkung des Dämpfungskolbens 20 mit einer Kraft belastet. Ein derartiger Dämpfungsmechanismus 14 ist an sich bekannt, so dass seine Funktion und Wirkung nicht im Einzelnen beschrieben werden muss.

An einem an dem Aggregat 6 ausgebildeten, quer zur Schwenkachse 4 angeordneten Flansch 26 ist ein Mitnehmerarm 28 ausgebildet, in dessen in Fig. 1 unterem Endbereich eine Mitnehmerplatte 30 angeordnet ist, die vorzugsweise aus einem Material besteht, welches in Verbindung mit der dieser zugewandten stirnseitigen Endfläche 32 des Dämpfungskolbens 20 einen vergleichsweise geringen Reibungskoeffizienten hat.

Die Mitnehmerplatte 30 liegt an der hinteren Endfläche 32 des Dämpfungskolbens 20 an, so dass nur eine Bewegung des Aggregates 6 entgegen der Spannrichtung auf den Dämpfungsmechanismus 14 übertragen und gedämpft wird, während der Dämpfungsmechanismus 14 bei einer Bewegung des Aggregates 6 in Spannrichtung unwirksam bleibt.

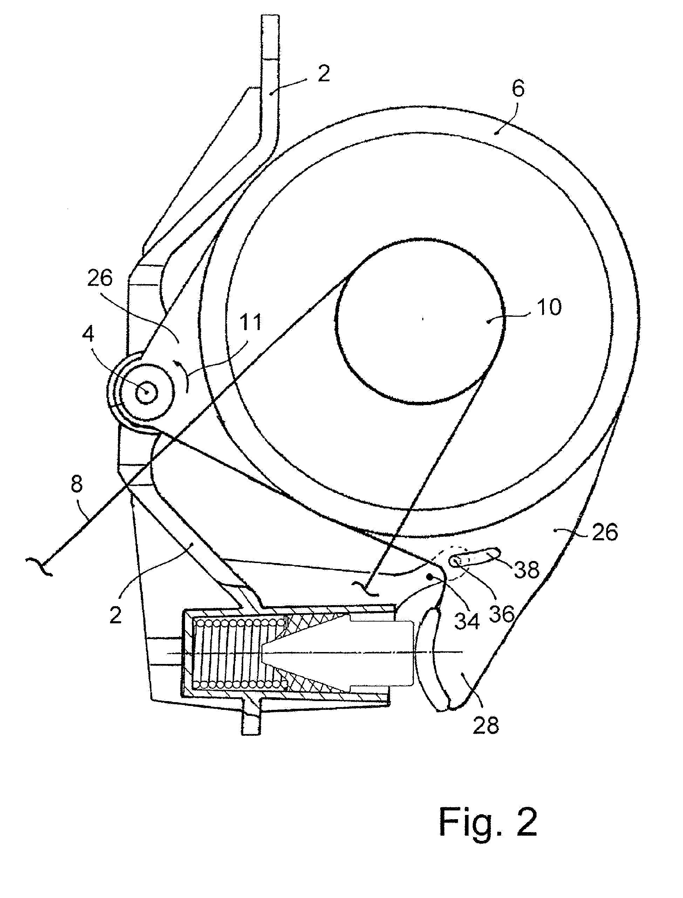

Fig. 2 zeigt im Wesentlichen eine Anordnung gemäß der Fig. 1, so dass sie insoweit nicht nochmals beschrieben zu werden braucht.

Im Gegensatz zur Fig. 1 ist in Fig. 2 jedoch an der Tragstruktur 2 ein Verriegelungsarm 34 ausgebildet, welcher sich zumindest in der dargestellten Stellung mit dem Flansch 26 beziehungsweise dem daran ausgebildeten Mitnehmerarm 28 überlappt. An dem Verriegelungsarm 34 ist ein als Verriegelungsstift ausgebildeter Riegel 36 angeordnet, welcher zwischen einer in die am Mitnehmerarm 28 ausgebildete Riegelöffnung 38 eingreifenden Eingriffsstellung und einer aus dieser zurückgezogenen Außereingriffsstellung verstellbar ist.

Um den Antriebsriemen 8 auf die Riemenscheibe 10 aufzulegen, wird das Aggregat 6 entgegen der Spannrichtung, also gegen die Kraft einer Spannfeder 12 in Fig. 2 im Uhrzeigersinn um die Schwenkachse 4 verschwenkt, bis der Riegel 36 in die Riegelöffnung 38 eingeführt werden kann. Nach dem Auflegen des Antriebsriemens 8 wird der Riegel 36 wieder in seine Außereingriffsstellung verstellt, so dass sich das Aggregat 6 unter der Wirkung der Spannfeder 12 in Spannrichtung bewegt und der Antriebsriemen 8 gespannt wird.

Wie Fig. 3 erkennen lässt, wird das um die Schwenkachse 4 an der Tragstruktur 2 schwenkbare Aggregat 6 durch die Spannfeder 12, die beispielsweise in einer vor oder hinter der Zeichenebene liegenden Ebene angeordnet sein kann, in der Spannrichtung belastet. Die Spannfeder 12 ist als Schrauben-Druckfeder ausgebildet, die zwischen dem Aggregat 6 und einem Tragbock 40 eingespannt ist, der in nicht näher dargestellter Weise ebenfalls an der Tragstruktur 2 oder direkt an dem Verbrennungsmotor befestigt ist.

Da die Spannfeder 12 in ihrem gesamten Betriebsbereich nur auf Druck belastet ist, genügt es, diese mittels sich gegenüberliegender, an dem Aggregat 6 einerseits beziehungsweise an der Tragstruktur oder dem Tragbock 40 andererseits ausgebildeter, in die jeweils zugeordneten Enden der Spannfeder 12 formschlüssig eingreifender Aufnahmestücke 42 beziehungsweise 44 gegen seitliches Ausweichen zu halten. Die Aufnahmestücke 42 beziehungsweise 44 können jede geeignete Form haben, beispielsweise im Querschnitt kreuzförmig (Fig. 4a), sternförmig (Fig. 4b), konisch (Fig. 4c) oder dergleichen.

Um der Spannfeder 12 eine progressiv wirkende Kennlinie zu geben, kann diese progressiv gewickelt sein, wie an sich bekannt und deshalb in Fig. 3 nicht näher dargestellt ist.

In Fig. 1 ist mit gestrichelten Linien ein um die Schwenkachse 4 schwenkbarer Hebel 46 dargestellt, an welchem eine Spannrolle 48 drehbar gelagert ist, die sich unter der Wirkung der Spannfeder 12 an einen Antriebsriemen 50 anlegt. An dem Hebel ist ein Mitnehmerarm 52 ausgebildet, der sich in der gleichen Weise, wie im Zusammenhang mit dem schwenkbar gelagerten Aggregat 6 bereits beschrieben wurde, an einen Dämpfungsmechanismus 14 anlegt, welcher die Bewegung der Spannrollenanordnung entgegen der Spannrichtung dämpft.

### Bezugszeichenliste

- 2: Tragstruktur
- 4: Schwenkachse
- 6: Aggregat
- 8: Antriebsriemen
- 10: Riemenscheibe
- 11: Pfeil
- 12: Spannfeder
- 14: Dämpfungsmechanismus
- 16: Dämpfungszylinder
- 18: Bremskörper
- 20: Dämpfungskolben
- 22: Federelement
- 24: Zylinderboden
- 26: Flansch
- 28: Mitnehmerarm
- 30: Mitnehmerplatte
- 32: Endfläche
- 34: Verriegelungsarm
- 36: Riegel
- 38: Riegelöffnung
- 40: Tragbock
- 42: Aufnahmestück
- 44: Aufnahmestück
- 46: Hebel
- 48: Spannrolle
- 50: Antriebsriemen
- 52: Mitnehmerarm

## Patentansprüche

1. Spannvorrichtung zum Spannen eines Antriebsriemens (8) oder einer Antriebskette, welcher beziehungsweise welche über die Riemenscheibe (10, 48) oder das Kettenrad eines anzutreibenden, in Spannrichtung verstellbaren Aggregates (6) beziehungsweise einer beweglichen Spannrollenanordnung geführt ist, umfassend eine in Spannrichtung wirkende Spannfeder (12) und einen entgegen der Spannrichtung wirkenden Dämpfungsmechanismus, **dadurch gekennzeichnet, dass** der Dämpfungsmechanismus (14) als von der Spannfeder (12) baulich getrenntes, linear wirkendes Bauelement ausgebildet ist, welches mit dem Aggregat (6) beziehungsweise der Spannrollenanordnung über eine nur bei einer Bewegung entgegen der Spannrichtung wirksame Mitnehmerverbindung (Mitnehmerplatte 30; Endfläche 32) gekoppelt ist.

2. Spannvorrichtung nach Anspruch 1, **dadurch gekennzeichnet, dass** der Dämpfungsmechanismus (14) einen in einem Dämpfungszylinder (16) verschiebbar angeordneten ringförmigen Bremskörper (18) umfasst, in welchen von einer Seite ein zum Bremskörper (18) hin konisch zulaufender Dämpfungskolben (20) eingreift, und der von der anderen Seite durch ein sich am Zylinderboden (24) abstützendes vorgespanntes Federelement (22) belastet ist.

3. Spannvorrichtung nach Anspruch 1 oder 2, **dadurch gekennzeichnet, dass** der Dämpfungszylinder (16) an einer das Aggregat (6) beziehungsweise die Spannrollenanordnung tragenden Tragstruktur (2) fest angeordnet ist, und dass der Dämpfungskolben (20) über die Mitnehmerverbindung (Mitnehmerplatte 30; Endfläche 32) mit dem Aggregat (6) gekoppelt ist.

4. Spannvorrichtung nach einem der Ansprüche 1 bis 3, **dadurch gekennzeichnet, dass** die Mitnehmerverbindung einen am Aggregat (6) beziehungsweise der Spannrollenanordnung angeordneten Mitnehmerarm (28) mit einer daran angeordneten Mitnehmerplatte (30) umfasst, die sich an die dieser zugewandte Endfläche (32) des Dämpfungskolbens (20) anlegt.

5. Spannvorrichtung nach einem der Ansprüche 1 bis 4, **dadurch gekennzeichnet, dass** eine Verriegelungsvorrichtung (Riegel 36; Riegelöffnung 38) zum Verriegeln des Aggregates (6) beziehungsweise der Spannrollenanordnung in einer ein Auflegen des Antriebsriemens (8) ermöglichenden Verriegelungsstellung vorgesehen ist.

6. Spannvorrichtung nach Anspruch 5, **dadurch gekennzeichnet, dass** die Verriegelungsvorrichtung ein an der Tragstruktur (6) angeordnetes Riegelelement (Riegel 36) umfasst, welches mit einem an dem Aggregat (6) angeordneten Gegen-Riegelelement (Riegelöffnung 38) in Eingriff beziehungsweise außer Eingriff bringbar ist.

7. Spannvorrichtung nach Anspruch 6, **dadurch gekennzeichnet, dass** an der Tragstruktur (2) ein Verriegelungsarm (34) ausgebildet ist, welcher zumindest in einer Verriegelungsstellung den Mitnehmerarm (28) überlappt, und dass an einem der beiden Bauteile, nämlich Verriegelungsarm (34) oder Mitnehmerarm (38), ein Riegel (36) angeordnet ist, welcher zwischen einer in eine am jeweils anderen Bauteil ausgebildete Riegelöffnung (38) eingreifenden Eingriffsstellung und einer Außereingriffsstellung verstellbar ist.

8. Spannvorrichtung nach einem der Ansprüche 1 bis 7, **dadurch gekennzeichnet, dass** die Spannfeder (12) als zwischen dem Aggregat (6) und der Tragstruktur (2) angeordnete Schrauben-Druckfeder ausgebildet ist.

9. Spannvorrichtung nach Anspruch 8, **dadurch gekennzeichnet, dass** die Spannfeder (12) mittels sich gegenüberliegender, an dem Aggregat (6) einerseits und an der Tragstruktur (2) andererseits ausgebildeter, in die jeweils zugeordneten Enden der Spannfeder (12) formschlüssig eingreifender Aufnahmestücke (42, 44) gehalten wird.

10. Spannvorrichtung nach Anspruch 8 oder 9, **dadurch gekennzeichnet, dass** die Spannfeder (12) als progressiv gewickelte Feder ausgebildet ist.
